# EUROPÄISCHE PATENTSCHRIFT

(11) **EP 3 914 980 B1**
(45) Veröffentlichungstag und Bekanntmachung des Hinweises auf die Patenterteilung: **08.01.2025**
(21) Anmeldenummer: 20710847.3
(22) Anmeldetag: 04.03.2020
(51) Int. Cl.: G05B 19/418

(54) **VERFAHREN UND SYSTEM ZUR QUALITÄTSKONTROLLE IN DER INDUSTRIELLEN FERTIGUNG**
METHOD AND SYSTEM FOR QUALITY CONTROL IN INDUSTRIAL PRODUCTION
PROCÉDÉ ET SYSTÈME DE CONTRÔLE DE QUALITÉ LORS DE LA PRODUCTION INDUSTRIELLE

(30) Priorität: 07.03.2019 EP 19161325
(43) Veröffentlichungstag der Anmeldung: 01.12.2021
(73) Patentinhaber: Siemens Aktiengesellschaft, 80333 München (DE)
(72) Erfinder: KROMPASS, Denis, 81549 München (DE); FRIKHA, Ahmed, 81549 München (DE); KÖPKEN, Hans-Georg, 91056 Erlangen (DE)
(74) Vertreter: Siemens Patent Attorneys
(86) Internationale Anmeldenummer: PCT/EP2020/055723
(87) Internationale Veröffentlichungsnummer: WO 2020/178350

(56) Entgegenhaltungen:
- US-A1- 2017 277 174
- US-A1- 2018 293 721

## Beschreibung

Die Erfindung betrifft ein Verfahren und System zur Qualitätskontrolle in der industriellen Fertigung für einen oder mehrere Produktionsprozesse zur Herstellung zumindest eines Werkstücks und/oder Produkts.

Die Überwachung der Qualität einer laufenden Produktion, um Kunden eine stabile Produktqualität zu liefern und zu gewährleisten, ist entscheidend für den Erfolg eines jedes Herstellers. Mängel in der Qualitätskontrolle sind daher nicht nur kostspielig, sie können auch den Ruf eines Herstellers nachhaltig beschädigen. Insbesondere in der Massenproduktion ist es jedoch nahezu unmöglich, für jedes an den Kunden gelieferte Produkt eine umfassende Qualitätskontrolle durchzuführen.

Daher wird häufig eine Qualitätskontrolle auf zwei Ebenen durchgeführt. Auf der ersten Ebene wird eine eher oberflächliche Qualitätskontrolle oft vom Maschinenoperateur selbst vorgenommen, um die gesamte Produktionsserie abzudecken, allerdings mit mangelhafter Genauigkeit. Auf der zweiten Ebene wird eine eingehende Qualitätskontrolle durch ausgebildetes Personal durchgeführt, um eine hohe Genauigkeit zu erzielen, allerdings nur für auswählte Einzelstücke einer Produktionsserie. Die Anzahl der untersuchten Einzelstücke und der Zeitpunkt einer Kontrolle beruhen häufig auf Erfahrungswerten für ein Produkt, den eingesetzten Maschinen und dem verwendeten Material. Obwohl dieser Ansatz seit Jahrzehnten eine bewährte Praxis darstellt, weist er Defizite auf, insbesondere, da aus der Kontrolle auf der zweiten Ebene nur ein Wissen und ein Erfahrungsschatz über die kleine Auswahl der kontrollierten Einzelstücke entstehen. Allerdings wird davon ausgegangen, dass die an der Auswahl von Einzelstücken festgestellten Mängel sich in der gesamten Produktionsserie seit der letzten durchgeführten Qualitätskontrolle wiederfinden. Bei der Feststellung von Mängeln an einer Auswahl von Einzelstücken werden daher entweder alle Einzelstücke einer Produktionsserie untersucht oder, was häufig kostengünstiger ist, die gesamte Produktionsserie als Ausschuss entsorgt.

Des Weiteren findet eine eingehende Qualitätskontrolle auf der zweiten Ebene häufig erst nach Kundenreklamationen statt und ist damit reaktiv. Zudem beruht das derzeitige System der Qualitätskontrolle auf der Annahme, dass festgestellte Mängel bei einem Einzelstück, das in einer Massenproduktionsanlage hergestellt wurde, für die gesamte Serie einer Produktion gelten und nicht nur bei dem Einzelstück auftreten. Darüber hinaus weist auch die Qualitätskontrolle selbst keine einheitliche Qualität auf, da sie häufig von dem Ausbildungsstand und der Tagesform des eingesetzten Personals abhängt.

Moderne Werkzeugmaschinen sind mit einer Vielzahl von Sensoren ausgestattet, die den Maschinen- und Bearbeitungszustand während der Produktion überwachen. Außerdem gibt es einen zunehmenden Trend, gemessene Daten zu speichern und zu verarbeiten, um durch eine eingehende Datenanalyse neue Optimierungsmöglichkeiten und ein tieferes Verständnis der zugrundeliegenden Verfahrensschritte zu entwickeln. Gut ausgebildete Experten sind durch ihr vertieftes Verständnis einer jeweiligen Domäne und der dort ablaufenden Prozesse und mittels neuer Softwarewerkzeuge in der Lage, Details im Produktionsprozess eines Produkts und/oder Werkstücks zu erkennen, wie dies bisher nicht möglich war. Bezogen auf die Qualitätskontrolle können diese Experten mittels der Daten und detaillierter Einblicke in die Mechanismen der Produktionsprozesse passgenaue softwaregesteuerte Lösungen entwickeln, die Mängel an den einzelnen Werkstücken nahezu in Echtzeit erkennen und/oder den jeweiligen Einzelprozess und/oder Gesamtprozess optimieren. Allerdings sind derart maßgeschneiderte Softwarelösungen oft sehr aufwändig und daher kosten- und zeitintensiv und benötigen häufig den Einsatz von optischen Sensoren, die häufig eher hochpreisig sind. Andererseits besteht ein hoher Bedarf, die Qualitätskontrolle in Produktionsanlagen durch Automatisierungstechniken zu verbessern.

US 2018/293721 A1 offenbart ein System, das ein bildgebendes Teilsystem aufweist, das eine Energiequelle und einen Detektor umfasst. Die Energiequelle ist so konfiguriert, dass sie Energie erzeugt, die auf eine Probe gerichtet ist, und der Detektor ist so konfiguriert, dass er Energie von der Probe detektiert und Bilder erzeugt, die auf die detektierte Energie reagieren. Die Komponenten umfassen ein erstes lernbasiertes Modell zur Erzeugung simulierter Konturen für die Muster auf der Grundlage eines Musters für die Probe, das von den Computerteilsystemen in das erste lernbasierte Modell eingegeben wird. Das zweite lernbasierte Modell erzeugt tatsächliche Konturen für die Muster in den erfassten Bildern der auf der Probe gebildeten Muster, die von den Computer-Subsystemen in das zweite lernbasierte Modell eingegeben werden. Die Computer-Subsysteme sind so konfiguriert, dass sie die tatsächlichen Konturen mit den simulierten Konturen vergleichen und Fehler in den auf der Probe gebildeten Mustern auf der Grundlage der Ergebnisse des Vergleichs erkennen.

US 2017/277174 A1 offenbart ein Bearbeitungsmaschinensystem, das eine Bearbeitungsmaschine; eine numerische Steuervorrichtung, die einen Befehl zum Antreiben einer Achse der Bearbeitungsmaschine erzeugt; eine Innenraum-Informationserfassungseinheit, die Innenraum-Informationen der numerischen Steuervorrichtung erfasst; eine vorläufige Bestimmungseinheit, die die Annahme/Ablehnung eines von der Bearbeitungsmaschine bearbeiteten Werkstücks auf der Grundlage eines Vergleichsergebnisses zwischen den Innenraum-Informationen und einem Schwellenwert bestimmt eine endgültige Bestimmungseinheit, die die Annahme/Ablehnung von Werkstücken bestimmt, die Ziele einer Genauigkeitsinspektion sind, die mindestens ein Werkstück enthalten, das von der vorläufigen Bestimmungseinheit auf der Grundlage eines Messergebnisses in Bezug auf eine Genauigkeit des Werkstücks als angenommen/ablehnend bestimmt wurde; und eine Schwellenwert-Aktualisierungseinheit, die den Schwellenwert, der für die Bestimmungsverarbeitung durch die vorläufige Bestimmungseinheit verwendet wird, auf der Grundlage von Bestimmungsergebnissen durch die vorläufige Bestimmungseinheit und die endgültige Bestimmungseinheit aktualisiert.

Eine skalierbare, automatisierte Mängelerkennung während der Herstellung/Fertigung eines Werkstücks und/oder Produkts ist der erste Schritt hin zu einer vollautomatischen, datengesteuerten Qualitätskontrolle in Fabriken und Produktionsanlagen. Häufig ist es jedoch nicht möglich, genügend Daten zu sammeln, die die gesamte Vielfalt der Bearbeitungsprozesse zur Herstellung von Werkstücken und Produkten abbilden, da sich die gesammelten Daten nur sehr spezifisch auf den jeweiligen Fertigungsstandort, den verwendeten Maschinentyp und die jeweilige NC-Steuerung beziehen. Ein Lösungsansatz besteht darin, für jedes mögliche Szenario maßgeschneiderte IT-Lösungen zu entwickeln, die das Sammeln und Kennzeichnen der Daten für jeden Prozessschritt sowie eine Testphase und eine Fehlerphase umfassen, bis die entwickelten IT-Lösungen zufriedenstellende Ergebnisse liefern. Eine solche Vorgehensweise ist jedoch sehr zeitaufwändig und kostenintensiv. Darüber hinaus kann davon ausgegangen werden, dass ein ausgereifter Fertigungsprozess eine große Menge von Werkstücken in ausreichender Qualität bereitstellt und fehlerhafte Werkstücke eher die Ausnahme bilden.

Die der Erfindung zu Grunde liegende Aufgabe besteht nun darin, ein Verfahren und ein System zur Qualitätskontrolle insbesondere in der industriellen Fertigung und Produktion für einen oder mehrere Produktionsprozesse zur Herstellung zumindest eines Werkstücke und/oder Produkts anzugeben, das sich durch eine hohe Zuverlässigkeit und Sicherheit auszeichnet und zudem kostengünstig in der Implementierungsphase und während des Fertigungsbetriebs ist.

Diese Aufgabe wird hinsichtlich eines Verfahrens durch die Merkmale des Patentanspruchs eins, und hinsichtlich eines Systems durch die Merkmale des Patentanspruchs acht erfindungsgemäß gelöst. Die weiteren Ansprüche betreffen bevorzugte Ausgestaltung der Erfindung.

Die Erfindung betrifft gemäß einem ersten Aspekt ein Verfahren zur Qualitätskontrolle nach Anspruch 1.

In einer vorteilhaften Weiterentwicklung ist das Lernmodell als tiefgehendes ("deep") neuronales Netzwerk ausgebildet, da für das Erkennen von fehlerhaften Werkstücken nur ein geringes systematisches Lösungswissen vorliegt und ein tiefgehendes neuronales Netzwerk mit mehreren Schichten dafür eignet ist, eine große Menge von teils unpräzisen Eingabeinformationen zu einem konkreten Ergebnis zu verarbeiten.

Vorteilhaftweise ist der Meta-Lernalgorithmus als ein agnostischer Meta-Lernalgorithmus ausgebildet, der das Lernmodell mittels eines Gradientenverfahrens trainiert.

In einer weiteren Ausgestaltung wird ein normierter Mittelwert einer festgelegten Messgröße bei einem Werkstück und/oder Produkt und/oder Produktionsprozess als Basis für die Berechnung einer Abweichung definiert.

Vorteilhafterweise weisen die aktuell generierten Daten eine Datenkennung (Label) auf. Somit können die aktuelle generierten Daten vorteilhaft zum überwachten Trainieren (engl. "supervised training") eines Lernmodells verwendet werden.

In einer weiteren Ausgestaltung verwenden die Sensoren nicht-optische Verfahren zur Datenerzeugung.

Vorteilhafterweise wird eine Anomalie festgestellt, wenn die Abweichung einen festgelegten Grenzwert über- oder unterschreitet.

Die Erfindung betrifft gemäß einem zweiten Aspekt ein System zur Qualitätskontrolle nach Anspruch 8.

In einer vorteilhaften Weiterentwicklung ist das Lernmodell als tiefgehendes neuronales Netzwerk ausgebildet.

Vorteilhafterweise ist der Meta-Lernalgorithmus als ein agnostischer Meta-Lernalgorithmus ausgebildet, der das Lernmodell mittels eines Gradientenverfahrens trainiert.

In einer vorteilhaften Ausgestaltung ist ein normierter Mittelwert einer festgelegten Messgröße bei einem Werkstück und/oder Produkt und/oder Produktionsprozess als Basis für die Berechnung einer Abweichung definiert.

In einer weiteren Ausgestaltung weisen die aktuell generierten Daten eine Datenkennung (Label) auf.

Vorteilhafterweise verwenden die Sensoren nicht-optische Verfahren zur Datenerzeugung.

In einer weiteren Ausgestaltung wird eine Anomalie festgestellt, wenn die Abweichung einen festgelegten Grenzwert über- oder unterschreitet.

Die Erfindung betrifft gemäß einem dritten Aspekt ein Computerprogrammprodukt, das einen und/der mehrere ausführbare Computercodes enthält zur Ausführung des Verfahrens nach einem oder mehreren der Ansprüche 1 bis 7.

Nachfolgend wird die Erfindung anhand von in der Zeichnung dargestellten Ausführungsbeispielen näher erläutert.

Dabei zeigen:

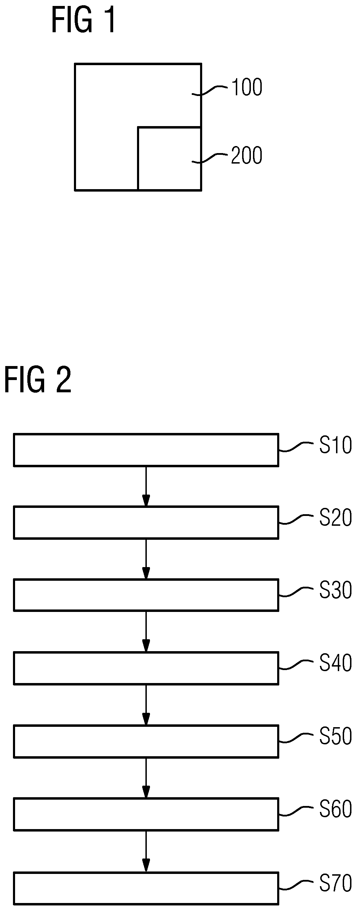

- Figur 1: ein Blockdiagramm zur Erläuterung eines Ausführungsdetails des erfindungsgemäßen Systems;
- Figur 2: ein Ablaufdiagramm zur Erläuterung eines Verfahrens gemäß der Erfindung; und
- Figur 3: eine schematische Darstellung eines Computerprogrammprodukt gemäß der Erfindung.

Zusätzliche Merkmale, Aspekte und Vorteile der Erfindung oder ihrer Ausführungsbeispiele werden durch die ausführliche Beschreibung in Verbindung mit den Ansprüchen ersichtlich.

Gemäß der vorliegenden Erfindung wird ein tiefgehendes neuronales Lernmodell (deep learning model) 100 verwendet, um Mängel an Werkstücken in einer Produktionsserie zu erkennen. Ein Beispiel für ein solches Lernmodell 100 stellt ein konvolutionales neuronales Netzwerk (engl. "convolutional neural network") dar. Ein tiefgehendes Lernmodell 100 bezeichnet eine Klasse von Optimierungsmethoden künstlicher neuronaler Netze, die mehrere Zwischenlagen (engl. "hidden layers") zwischen Eingabeschicht und Ausgabeschicht haben und dadurch eine umfangreiche innere Struktur aufweisen. Ein solches Lernmodell 100 ist für die schnelle Anpassung an eine neue Zielaufgabe optimiert, auch wenn nur wenige Eingangsdaten aus einem normalen Herstellungs- und/oder Bearbeitungsprozess zur Verfügung stehen Das Lernmodell kann mittels Frameworks wie beispielsweise TensorFlow oder PyTorch programmiert werden.

Für das Trainieren und Kalibrieren des Lernmodells 100 wird gemäß der Erfindung ein agnostischer Meta-Lern-Algorithmus 200 verwendet, wie er beispielsweise von Chelsea Finn et al. (Chelsea Finn, Pieter Abbeel, Sergey Levine: Model-Agnostic Meta-Learning for Fast Adaption of Deep Networks, 18 July 2017) beschrieben wurde. Der agnostische Meta-Lernalgorithmus 200 ist in der Lage, das Lernmodell 100 mittels eines Gradientenverfahrens zu trainieren, um eine Initialisierung des parametrisierten tiefgehenden Lernmodells 100 durchzuführen.

Im Folgenden werden die Datenaufbereitung, das Modelltraining und die Modellanwendung für einen Anwendungsfall näher beschrieben. Die Erkennung von Anomalien und/oder Fehlern während der Herstellung und/oder Bearbeitung von Werkstücken und/oder anderen Produkten basiert ausschließlich auf Sensorsignaldaten, die von Datenerfassungsgeräten und Sensoren in einer Produktionsanlage generiert werden.

Durch das Trainieren mittels des agnostischen Meta-Lernalgorithmus 200 ist das tiefgehende Lernmodell 100 in der Lage, sich nach der Trainingsphase an einen neuen Fertigungsprozess anzupassen und dabei nur Daten von Werkstücken, die eine hinreichend gute Qualität aufweisen, zu verwenden. Im Idealfall erreicht das Lernmodell 100 die erforderliche Anpassung an einen neuen Fertigungsprozessablauf bereits durch die Daten, die bei den Testläufen während der Kalibrierungsphase generiert wurden.

Gemäß der vorliegenden Erfindung wird das Lernmodell 100 nur auf Basis von Daten über Normalzustände eines Werkstücks und/oder Produkts (Normalzustandsdaten) und im Rahmen der Bearbeitung von vorzugsweise nicht visuellen Sensordaten mit dem Zweck der Anomalie-Erkennung in Fertigungsprozessen kalibriert.

Im Folgenden wird die Datenaufbereitung für das Training des Lernmodells 100 näher erläutert. Um das Lernmodell 100 zu trainieren, ist eine ausreichende Anzahl von Sensoren in einer Fertigungsanlage notwendig. Beispielswiese können diese Sensoren die Drehmomente der verschiedenen Achsen bei einer Fräsmaschine messen und Abweichungen steuern. Außerdem sind Daten von einer ausreichenden Anzahl an Werkstücken und Bearbeitungsprozessen erforderlich. Darüber hinaus sollte eine Datenkennung (Label) vorgesehen sein, die die Daten, die auf Anomalien hinweisen, entsprechend markieren.

Vorzugsweise nimmt ein Experte die Kennzeichnung der Daten mit Datenkennungen (Labeling) mit einem entsprechenden Hinweis vor. Als Beispiel seien Drehmomentmessungen einer Frässpindel genannt. Es werden beispielsweise die Regelabweichungen der Z-Achse von 100 Werkstücken und bei 8 verschiedenen Verarbeitungsprozessen untersucht. Die Verarbeitungsprozesse umfassen verschiedene Grobbearbeitungsprozesse, beispielsweise das Einschneiden einer Tasche in das Werkstück, und Veredelungsprozesse wie das Glätten der oberen Oberfläche des Werkstücks.

Als Vorverarbeitungsschritt des erfindungsgemäßen Verfahrens werden die verschiedenen Datensignale, die bei jedem Prozessschritt generiert werden, gemäß ihrer Abweichung von einem festgelegten Normwert auf einer Skala erfasst und damit skaliert. Bei einigen Datensignalen kann es auch sinnvoll sein, den Datenwert des Datensignals der repräsentativen Daten für die normale Bearbeitung (Normbearbeitung) von den neu generierte Datensignalen zu subtrahieren, um die Abweichung deutlicher erfassen zu können. Dies ist insbesondere sinnvoll, wenn der Wert der Abweichung im Vergleich zum Wert des Datensignals klein ist. Es werden somit die Abweichungen von einem normierten Mittelwert einer festgelegten Messgröße bei einem Werkstück und/oder Produkt erfasst.

Das Lernmodell 100 wird mittels des agnostischen Meta-Lernalgorithmus 200 trainiert. Der Algorithmus 200 zum Trainieren des Modells kann wie folgt als Pseudocode dargestellt werden:
1. Vorbereiten der Daten.
2. Zufälliges Initialisieren der Lernmodellparameter θ.
3. **solange** nicht konvergierend
4. Entnehmen einer Menge von n Prozessen Pᵢ ~ p (P)
5. **Für** jeden Pᵢ ist **auszuführen:**
6. Entnehmen von k Trainingsbeispielen für das normale Bearbeitungsverhalten aus dem Prozess Pᵢ.
7. Bewerten der Leistungsfähigkeit der Anomalie-Erkennung des Lernmodells anhand dieser Beispiele.
8. Aktualisieren der Lernmodellparameter θ nach θ' unter Verwendung eines Gradientenverfahrens.
9. **Ende für**
10. Entnehme n x k Trainingsbeispiele für die Erkennung von Anomalien aus der entnommenen Menge von n Prozessen.
11. Aktualisieren der Lernmodellparameter θ bezüglich des Fehlers, der von dem mit θ' parametrisierten Modell aufgrund des Gradientenverfahrens entstanden ist.
12. **Ende solange**

In der Trainingsphase wird das Lernmodell 100 für den Anwendungsfall optimiert. Wird das Lernmodell 100 zum Erkennen von Anomalien bei einem neuen Werkstück und/oder bei einem neuen Bearbeitungsprozess eingesetzt, so wird erfindungsgemäß angenommen, dass während der Kalibrierungsphase der Maschine und des Prozesses genügend Daten bezogen auf die normale Bearbeitung erfasst wurden, beispielsweise durch die Anfertigung von Testwerkstücken. Erfindungsgemäß werden die Verfahrensschritte der inneren Trainingsschleife von dem Meta-Lernalgorithmus 200 verwendet, um die Lernmodellparameter 100 schnell an die neue Situation (d.h. neues Werkstück und/oder neuer Fertigungsprozess) anzupassen:
1. Vorverarbeiten der Kalibrierungsdaten.
2. Initialisieren des Lernmodells 100 mit den Parametern θ, die während des Lernmodelltrainings gefunden wurden.
3. Entnehmen von k Trainingsbeispielen für das normale Bearbeitungsverhaltens nach dem neuen Prozess Pi.
4. Aktualisieren der Lernmodellparameter θ auf θ' unter Verwendung desselben konfigurierten Gradientenverfahrens, das während des Trainings verwendet wurde.

Wenn das Lernmodell 100 in den Produktionsmodus wechselt, wird das kalibrierte Lernmodell 100 verwendet, um Anomalien bei den von den Sensoren aktuell erzeugten Daten (Live-Daten) für ein Werkstück und/oder Produkt bei einem bestimmten Produktionsprozess festzustellen:
1. Vorverarbeiten der aktuell erzeugten Daten.
2. Initialisieren des Lernmodells 100 mit den Parametern θ ', die während der Modellkalibrierung gefunden wurden.
3. Vorhersagen von Anomalie-Wahrscheinlichkeiten für die aktuell erzeugten Daten mit dem Lernmodell 100.

Das Lernmodell 100 wird unter ähnlichen Bedingungen trainiert, die in einem realen Produktionsszenario auftreten würden. Vorteilhaftweise wird das Lernmodell 100 in einer Laborumgebung trainiert mit einer ausreichenden Menge an Daten mit einer Datenkennung von verschiedenen Bearbeitungsprozessen und/oder Fertigungsschritten wie beispielsweise der Verwendung von unterschiedlichen Maschinen. Durch den agnostischen Meta-Lernalgorithmus 200 ist es möglich, dass das Lernmodell 100 sich schnell an eine neue Produktionsumgebung und/oder Produktionsprozessen anpasst.

Vorteilhafterweise wird in jeder Trainingsiteration ein Prozessschritt und ein begrenzter Datensatz aus den normalen Fertigungs- und Bearbeitungsprozessen bei der Fertigung von Werkstücken verwendet, um das Lernmodell 100 zu kalibrieren. Das Lernmodell 100 ist daher in der Lage, aus Sensorsignaldaten, die während eines neuen Fertigungsprozesses generiert werden und die nicht während der Trainingsphase des Lernmodells 100 verwendet wurden, Anomalien bei einzelnen Werkstücken festzustellen. Beim Einsatz der Lernmodells 100 in der Fertigung werden dann Anomalien, die einen festgelegten Grenzwert unter- oder überschreiten, bei jedem einzelnen Werkstück, für das aktuelle Daten generiert werden, schnell und effiziert erkannt.

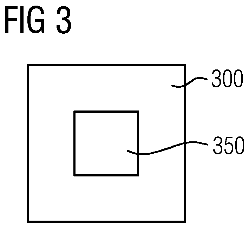

Fig. 3 zeigt ein Ablaufdiagramm eines erfindungsgemäßen Verfahrens zur Qualitätskontrolle in der industriellen Fertigung.

In einem Schritt S10 wird ein Lernmodell 100 für einen oder mehrere Produktionsprozess(e) zumindest eines Werkstücks und/oder Produkts erstellt.

In einem Schritt S20 wird das Lernmodell 100 mit einem Meta-Lernalgorithmus 200 trainiert und initialisiert.

In einem Schritt S30 wird das Lernmodell 100 mit normierten Daten zumindest eines Produktionsprozesses für das zumindest eine Werkstück und/oder Produkt kalibriert.

In einem Schritt S40 werden aktuell erzeugte Daten des zumindest einen Produktionsprozesses für zumindest ein aktuell hergestelltes Werkstück/Produkt an das Lernmodell (100) weitergegeben, wobei die Daten von Sensoren generiert werden.

In einem Schritt S50 vergleicht das Lernmodell 100 die aktuell erzeugten Daten mit den normierten Daten und stellt Abweichungen fest.

In einem Schritt S60 skaliert das Lernmodell die Abweichungen zwischen den aktuell erzeugten Daten und den normierten Daten.

In einem Schritt S70 teilt das Lernmodell das Vorhandensein einer Anomalie bei dem aktuell erzeugten Werkstück/Produkt mit.

Fig. 3 stellt schematisch ein Computerprogrammprodukt 300 dar, das einen und/der mehrere ausführbare Computercodes 350 enthält zur Ausführung des Verfahrens nach dem ersten Aspekt der Erfindung.

Die vorliegende Erfindung kann sehr kostengünstig eingesetzt werden, da der Kalibrierungsaufwand des Lernmodells 100 für einen neuen Fertigungsprozess gering ist und leicht umgesetzt werden kann. Darüber hinaus ermöglicht die vorliegende Erfindung eine geführte Qualitätskontrolle gegenüber einer geplanten Qualitätskontrolle in der industriellen Fertigung. Der Zeitraum, auf Mängel während einer laufenden Produktion zu reagieren, kann deutlich verkürzt und die Ausschussmenge von Produkten erheblich reduziert werden. Bei hohen Stückzahlen und in der Massenproduktion kann die vorliegende Erfindung vorteilhaft verwendet werden, da jedes Werkstück mit hochauflösenden Daten kontrolliert werden kann. Mit der vorliegenden Erfindung kann den Singularitäten, die jeder Produktionsprozess, jede Maschine und jeder Standort aufweist, begegnet werden.

## Patentansprüche

1. Verfahren zur Qualitätskontrolle in der industriellen Fertigung für einen oder mehrere Produktionsprozess(e) zur Herstellung zumindest eines Werkstücks und/oder Produkts, umfassend:
- Erstellen (S10) eines Lernmodells (100) für zumindest einen Produktionsprozess des Werkstücks und/oder Produkts;
- Trainieren und Initialisieren (S20) des Lernmodells (100) mit einem Meta-Lernalgorithmus (200);
- Kalibrieren (S30) des Lernmodells (100) mit normierten Daten des zumindest einen Produktionsprozesses für das zumindest eine Werkstück und/oder Produkt;
- Weitergeben (S40) von aktuell erzeugten Daten des zumindest einen Produktionsprozesses für zumindest ein aktuell hergestelltes Werkstück/Produkt an das Lernmodell (100), wobei die Daten von Sensoren erzeugt werden;
- Vergleichen (S50) der aktuell erzeugten Daten mit den normierten Daten und Feststellen von Abweichungen durch das Lernmodell (100);
- Skalieren (S60) der Abweichungen zwischen den aktuell erzeugten Daten und den normierten Daten durch das Lernmodell (100); und
- Mitteilen (S70) des Vorhandenseins einer Anomalie bei dem aktuell erzeugten Werkstück/Produkt durch das Lernmodell (100).

2. Verfahren nach Anspruch 1, **dadurch gekennzeichnet, dass** das Lernmodell (100) als tiefgehendes neuronales Netzwerk ausgebildet ist.

3. Verfahren nach Anspruch 1 oder 2, **dadurch gekennzeichnet, dass** der Meta-Lernalgorithmus (200) ein agnostischer Meta-Lernalgorithmus ist, der das Lernmodell (100) mittels eines Gradientenverfahrens trainiert.

4. Verfahren nach einem der vorangehenden Ansprüche, **dadurch gekennzeichnet, dass** ein normierter Mittelwert einer festgelegten Messgröße bei einem Werkstück und/oder Produkt und/oder Produktionsprozess als Basis für die Berechnung einer Abweichung definiert wird.

5. Verfahren nach einem der vorangehenden Ansprüche, **dadurch gekennzeichnet, dass** die aktuell generierten Daten eine Datenkennung aufweisen.

6. Verfahren nach einem der vorangehenden Ansprüche, **dadurch gekennzeichnet, dass** die Sensoren nicht-optische Verfahren zur Datenerzeugung verwenden.

7. Verfahren nach einem der vorangehenden Ansprüche, **dadurch gekennzeichnet, dass** eine Anomalie festgestellt wird, wenn die Abweichung einen festgelegten Grenzwert über- oder unterschreitet.

8. System zur Qualitätskontrolle in der industriellen Fertigung für einen oder mehrere Produktionsprozess(e)zur Herstellung zumindest eines Werkstücks und/oder Produkts, umfassend:
ein Lernmodell (100) für zumindest einen Produktionsprozess des Werkstücks und/oder Produkts, wobei das Lernmodell (100) ausgebildet ist, von einem Meta-Lernalgorithmus (200) trainiert und initialisiert zu werden, und wobei das Lernmodel (100) ausgebildet ist, mit normierten Daten des zumindest einen Produktionsprozesses für das zumindest eine Werkstück und/oder Produkt kalibriert zu werden, und
ein oder mehrere Sensoren, die ausgebildet sind, aktuelle Daten eines Produktionsprozesses für ein aktuell hergestelltes Werkstück zu erzeugen und an das Lernmodell (100) weiterzugeben, wobei das Lernmodell (100) ausgebildet ist, die aktuell erzeugten Daten mit den normierten Daten zu vergleichen, Abweichungen festzustellen und die Abweichungen zwischen den aktuell erzeugten Daten und den normierten Daten zu skalieren, und wobei das Lernmodell (100) ausgebildet ist, das Vorhandensein einer Anomalie bei dem aktuell erzeugten Werkstück/Produkt mitzuteilen.

9. System nach Anspruch 8, **dadurch gekennzeichnet, dass** das Lernmodell (100) als tiefgehendes neuronales Netzwerk ausgebildet ist.

10. System nach Anspruch 8 oder 9 **dadurch gekennzeichnet, dass** der Meta-Lernalgorithmus (200) als ein agnostischer Meta-Lernalgorithmus ausgebildet ist, der das Lernmodell (100) mittels eines Gradientenverfahrens trainiert.

11. System nach einem der vorangehenden Ansprüche 8-10, **dadurch gekennzeichnet, dass** ein normierter Mittelwert einer festgelegten Messgröße bei einem Werkstück und/oder Produkt und/oder Produktionsprozess als Basis für die Berechnung einer Abweichung definiert ist.

12. System nach einem der vorangehenden Ansprüche 8-11, **dadurch gekennzeichnet, dass** die aktuell generierten Daten eine Datenkennung aufweisen.

13. System nach einem der vorangehenden Ansprüche 8-12, **dadurch gekennzeichnet, dass** die Sensoren ausgebildet sind, nicht-optische Verfahren zur Datenerzeugung zu verwenden.

14. System nach einem der vorangehenden Ansprüche 8-13, **dadurch gekennzeichnet, dass** eine Anomalie festgestellt wird, wenn die Abweichung einen festgelegten Grenzwert über- oder unterschreitet.

15. Ein Computerprogrammprodukt (300), das einen und/oder mehrere ausführbare Computercodes (350) enthält zur Ausführung des Verfahrens nach einem oder mehreren der Ansprüche 1 bis 7.

## Claims

1. Method for quality control in industrial manufacturing for one or more production process/es for producing at least one workpiece and/or product, comprising:
- creating (S10) a learning model (100) for at least one production process for the workpiece and/or product;
- training and initializing (S20) the learning model (100) using a meta-learning algorithm (200);
- calibrating (S30) the learning model (100) using normalized data of the at least one production process for the at least one workpiece and/or product;
- forwarding (S40) currently generated data of the at least one production process for at least one currently produced workpiece/product to the learning model (100), the data being generated by sensors;
- the learning model (100) comparing (S50) the currently generated data with the normalized data and finding deviations;
- the learning model (100) scaling (S60) the deviations between the currently generated data and the normalized data; and
- the learning model (100) communicating (S70) the presence of an anomaly for the currently produced workpiece/product.

2. Method according to Claim 1, **characterized in that** the learning model (100) is in the form of a deep neural network.

3. Method according to Claim 1 or 2, **characterized in that** the meta-learning algorithm (200) is an agnostic meta-learning algorithm that trains the learning model (100) by means of a gradient method.

4. Method according to one of the preceding claims, **characterized in that** a normalized mean value of a stipulated measured variable for a workpiece and/or product and/or production process is defined as the basis for calculating a deviation.

5. Method according to one of the preceding claims, **characterized in that** the currently generated data have a data identifier.

6. Method according to one of the preceding claims, **characterized in that** the sensors use nonoptical methods for data generation.

7. Method according to one of the preceding claims, **characterized in that** an anomaly is found if the deviation is above or below a stipulated limit value.

8. System for quality control in industrial manufacturing for one or more production process/es for producing at least one workpiece and/or product, comprising:
a learning model (100) for at least one production process for the workpiece and/or product, the learning model (100) being designed to be trained and initialized by a meta-learning algorithm (200), and the learning model (100) being designed to be calibrated using normalized data of the at least one production process for the at least one workpiece and/or product, and
one or more sensors designed to generate current data of a production process for a currently produced workpiece and to forward said data to the learning model (100), the learning model (100) being designed to compare the currently generated data with the normalized data, to find deviations and to scale the deviations between the currently generated data and the normalized data, and the learning model (100) being designed to communicate the presence of an anomaly for the currently produced workpiece/product.

9. System according to Claim 8, **characterized in that** the learning model (100) is in the form of a deep neural network.

10. System according to Claim 8 or 9**, characterized in that** the meta-learning algorithm (200) is in the form of an agnostic meta-learning algorithm that trains the learning model (100) by means of a gradient method.

11. System according to one of preceding Claims 8-10, **characterized in that** a normalized mean value of a stipulated measured variable for a workpiece and/or product and/or production process is defined as the basis for calculating a deviation.

12. System according to one of preceding Claims 8-11, **characterized in that** the currently generated data have a data identifier.

13. System according to one of preceding Claims 8-12, **characterized in that** the sensors are designed to use nonoptical methods for data generation.

14. System according to one of preceding Claims 8-13, **characterized in that** an anomaly is found if the deviation is above or below a stipulated limit value.

15. Computer program product (300) containing one or more executable computer codes (350) for performing the method according to one or more of Claims 1 to 7.

## Revendications

1. Procédé de contrôle de qualité lors de la production industrielle pour un ou plusieurs processus de production pour fabriquer au moins une pièce et/ou un produit, comprenant :
- la création (S10) d'un modèle d'apprentissage (100) pour au moins un processus de production de la pièce et/ou du produit ;
- l'entraînement et l'initialisation (S20) du modèle d'apprentissage (100) avec un algorithme de méta-apprentissage (200) ;
- le calibrage (S30) du modèle d'apprentissage (100) avec des données standardisées d'au moins un processus de production pour l'au moins une pièce et/ou un produit ;
- la transmission (S40) des données actuellement générées de l'au moins un processus de production pour au moins une pièce/un produit actuellement fabriqué(e) au modèle d'apprentissage (100), les données étant générées par des capteurs ;
- la comparaison (S50) des données actuellement générées avec les données standardisées et le relevé des écarts par le modèle d'apprentissage (100) ;
- la mise à l'échelle (S60) des écarts entre les données actuellement générées et les données standardisées par le modèle d'apprentissage (100) ; et
- la notification (S70) de la présence d'une anomalie dans la pièce/le produit actuellement fabriqué(e) par le modèle d'apprentissage (100).

2. Procédé selon la revendication 1, **caractérisé en ce que** le modèle d'apprentissage (100) est conçu comme un réseau neuronal profond.

3. Procédé selon la revendication 1 ou 2, **caractérisé en ce que** l'algorithme de méta-apprentissage (200) est un algorithme de méta-apprentissage agnostique qui entraîne le modèle d'apprentissage (100) à l'aide d'une méthode de gradient.

4. Procédé selon l'une quelconque des revendications précédentes, **caractérisé en ce qu'**une valeur moyenne standardisée d'une grandeur de mesure définie pour une pièce et/ou un produit et/ou un processus de production est définie comme base pour le calcul d'un écart.

5. Procédé selon l'une quelconque des revendications précédentes, **caractérisé en ce que** les données actuellement générées possèdent un identifiant de données.

6. Procédé selon l'une quelconque des revendications précédentes, **caractérisé en ce que** les capteurs utilisent des procédés non optiques pour générer des données.

7. Procédé selon l'une quelconque des revendications précédentes, **caractérisé en ce qu'**une anomalie est détectée lorsque l'écart dépasse ou descend en dessous d'une valeur limite prédéfinie.

8. Système de contrôle de qualité lors de la production industrielle d'un ou de plusieurs processus de production pour fabriquer au moins une pièce et/ou un produit, comprenant :
un modèle d'apprentissage (100) pour au moins un processus de production de la pièce et/ou du produit, le modèle d'apprentissage (100) étant conçu pour être entraîné et initialisé par un algorithme de méta-apprentissage (200), et le modèle d'apprentissage (100) étant conçu pour être calibré avec des données standardisées de l'au moins un processus de production pour l'au moins une pièce et/ou un produit, et un ou plusieurs capteurs qui sont conçus pour générer des données actuelles d'un processus de production pour une pièce en cours de fabrication et les transmettre au modèle d'apprentissage (100), le modèle d'apprentissage (100) étant conçu pour comparer les données actuellement générées avec les données standardisées, pour relever les écarts et pour mettre à l'échelle les écarts entre les données actuellement générées et les données standardisées, et le modèle d'apprentissage (100) étant conçu pour détecter la présence d'une anomalie pour la pièce/le produit actuellement créé(e).

9. Système selon la revendication 8, **caractérisé en ce que** le modèle d'apprentissage (100) est conçu comme un réseau neuronal profond.

10. Système selon la revendication 8 ou 9, **caractérisé en ce que** l'algorithme de méta-apprentissage (200) est conçu comme un algorithme de méta-apprentissage agnostique qui entraîne le modèle d'apprentissage (100) à l'aide d'une méthode de gradient.

11. Système selon l'une des revendications précédentes 8 à 10, **caractérisé en ce qu'**une valeur moyenne standardisée d'une grandeur de mesure définie pour une pièce et/ou un produit et/ou un processus de production est définie comme base pour le calcul d'un écart.

12. Système selon l'une des revendications précédentes 8 à 11, **caractérisé en ce que** les données actuellement générées possèdent un identifiant de données.

13. Système selon l'une des revendications précédentes 8 à 12, **caractérisé en ce que** les capteurs sont conçus pour utiliser des procédés non optiques pour générer des données.

14. Système selon l'une des revendications précédentes 8 à 13, **caractérisé en ce qu'**une anomalie est détectée lorsque l'écart dépasse ou descend en dessous d'une valeur limite spécifiée.

15. Produit programme informatique (300) qui contient un et/ou plusieurs codes informatiques exécutables (350) pour mettre en œuvre le procédé selon une ou plusieurs des revendications 1 à 7.
